# NEUE EUROPÄISCHE PATENTSCHRIFT

(11) **EP 1 478 520 B2**
(45) Veröffentlichungstag und Bekanntmachung des Hinweises auf die Entscheidung über den Einspruch: **21.01.2015**
(45) Hinweis auf die Patenterteilung: 27.05.2009
(21) Anmeldenummer: 03742547.7
(22) Anmeldetag: 19.02.2003
(51) Int. Cl.: B42D 15/00

(54) **SICHERHEITSDOKUMENT UND SICHERHEITSELEMENT FÜR EIN SICHERHEITSDOKUMENT**
SECURITY DOCUMENT AND SECURITY ELEMENT FOR A SECURITY DOCUMENT
DOCUMENT SECURISE ET ELEMENT DE SECURITE POUR UN DOCUMENT SECURISE

(30) Priorität: 22.02.2002 DE 10207622
(43) Veröffentlichungstag der Anmeldung: 24.11.2004
(73) Patentinhaber: Giesecke & Devrient GmbH, 81677 München (DE)
(72) Erfinder: HEIM, Manfred, 81379 München (DE)
(74) Vertreter: Klunker . Schmitt-Nilson . Hirsch
(86) Internationale Anmeldenummer: PCT/EP2003/001677
(87) Internationale Veröffentlichungsnummer: WO 2003/070482

(56) Entgegenhaltungen:
- EP-B1- 0 657 297
- WO-A-01/53113
- WO-A1-00/39391
- WO-A1-02/00445
- CA-A1- 2 569 243
- CA-C- 2 163 528
- DE-C- 4 334 848
- US-A- 5 298 922

## Beschreibung

Die Erfindung betrifft ein Sicherheitselement sowie ein Sicherheitsdokument, insbesondere Wertpapier, wie beispielsweise eine Banknote, mit einem solchen Sicherheitselement. Die Erfindung betrifft gleichermaßen ein Halbzeug zur Herstellung eines solchen Sicherheitsdokuments. Insbesondere betrifft die Erfindung ein Sicherheitselement in Form eines Sicherheitsfadens zur Einlagerung in das Sicherheitsdokument als so genannter Fensterfaden und in Form eines Etiketts oder Transferelements zur Applikation auf das Sicherheitsdokument.

Sicherheitsdokumente im Sinne der vorliegenden Erfindung sind insbesondere Banknoten, aber auch Schecks, Scheckkarten, Kreditkarten, Ausweise, Pässe, Eintrittskarten, Fahrkarten und dergleichen. Als Halbzeug zur Herstellung der vorgenannten Sicherheitsdokumente kommen beispielsweise unbedrucktes Sicherheitspapier und andere unbedruckte Sicherheitsdokumentsubstrate in Betracht.

Die vorgenannten Sicherheitsdokumente werden üblicherweise mittels eingelagerter Sicherheitsfäden oder aufgebrachter Sicherheitsetiketten oder -transferelemente zum Schutz gegen Nachahmung und als Echtheitsnachweis ausgestattet. Sicherheitsfäden in Form von Fensterfäden sind beispielsweise im Zusammenhang mit Wertdokumenten, wie Banknoten, weithin bekannt, sind aber auch zur Verwendung in Scheckkarte und dergleichen grundsätzlich geeignet. Fensterfäden sind in das Grundmaterial des Sicherheitsdokuments eingelagert und erscheinen periodisch an der Sicherheitsdokumentoberfläche, so dass sie in diesen "Fensterbereichen" visuell erkennbar sind. In durchscheinenden Substraten ergibt sich ein sogenannter Auflicht-/Durchlichteffekt, wobei der Sicherheitsfaden im Durchlicht betrachtet gegenüber dem umgebenden Material als dunkler Streifen erscheint. Im Auflicht dagegen ist der Sicherheitsfaden nur in den Fensterbereichen erkennbar.

Man unterscheidet zwischen einfachen Fensterfäden, die nur an einer Oberfläche erscheinen und zweiseitigen Fensterfäden, die an beiden Oberflächen erscheinen, wobei ein Sonderfall des zweiseitigen Fensterfadens nachfolgend als Durchsichtsfensterfaden bezeichnet wird, der gleichzeitig von beiden Seiten des Wertdokuments aus sichtbar ist. Ein Durchsichtsfensterfaden überspannt sozusagen ein Loch oder einen durchsichtigen Bereich in dem Wertdokument. Ein weiterer zweiseitiger Fensterfaden ist der im Folgenden als alternierender Fensterfaden bezeichnete Sicherheitsfaden, der abwechselnd auf der Vorder- bzw. Rückseite eines Dokumentes sichtbar ist. Neben Sicherheitsfäden besteht auch die Möglichkeit, so genannte Transferelemente als Sicherheitselemente zu verwenden, wobei diese üblicherweise Aussparungen, z.B. ein Loch, in einem Dokument überspannen.

Die Sicherheitselemente besitzen komplexe, visuell und/oder maschinell prüfbare Sicherheitsmerkmale, die nur mit großem Aufwand nachahmbar sind. Um den Fälschungsschutz zusätzlich zu erhöhen, besitzen solche Sicherheitselemente häufig mehrere unterschiedliche Sicherheitsmerkmale, die in ihrer Kombination auch einen neuen gemeinsamen Effekt besitzen können.

Ein in Sicherheitselementen häufig anzutreffendes Sicherheitsmerkmal ist eine mehrschichtige dichroitische Beschichtung, deren Farbeindruck sich je nach Betrachtungswinkel und/oder je nach Betrachtung im Durchlicht oder Auflicht ändert. Dieses Phänomen beruht auf Interferenzeffekten aufgrund der Überlagerung von Mehrfachreflexionen und/oder -transmissionen von Lichtwellen innerhalb des Schichtaufbaus in Kombination mit selektiven Absorptionseigenschaften der Schichtmaterialien. Die Farbänderung bei variierendem Betrachtungswinkel wird auch als Farbkippeffekt oder Color-Shift-Effekt bezeichnet. Die Farbänderung bei wechselnder Betrachtung im Auflicht und im Durchlicht wird demgegenüber nachfolgend als Farbwechseleffekt bezeichnet.

Optische Interferenzbeschichtungen mit Farbkippeffekt werden im Zusammenhang mit Sicherheitselementen beispielsweise beschrieben in EP 0 341 002 B1 und US 3,858,977. Je nach Art und Anzahl der Schichten im Schichtaufbau können 2, 3, 4 oder mehr vom Betrachtungswinkel abhängige unterschiedliche Farbwirkungen auftreten. Die Reflexions- und Transmissionseigenschaften solcher Farbkippeffektschichten hängen von mehreren Faktoren ab, insbesondere von den Brechungsindizes, Absorptionskoeffizienten und Schichtdicken sowie der Schichtanzahl des Schichtaufbaues.

Obwohl Sicherheitselemente mit dichroitischer Beschichtung bereits vorgeschlagen wurden, besteht nach wie vor Bedarf an demgegenüber verbesserten Sicherheitselementen.

Aufgabe der vorliegenden Erfindung ist es daher, Sicherheitselemente, insbesondere einen Sicherheitsfaden bzw. ein Transferelement zur Verfügung zu stellen, die im Vergleich zum Stand der Technik eine erhöhte Fälschungssicherheit aufweisen.

Diese Aufgabe wird erfindungsgemäß durch ein Sicherheitselement sowie ein Sicherheitsdokument bzw. Halbzeug mit den Merkmalen der nebengeordneten Ansprüche gelöst. In davon abhängigen Ansprüchen sind vorteilhafte Weiterbildungen und Ausgestaltungen der Erfindung angegeben.

Demnach umfasst das Sicherheitselement ein mehrschichtiges Interferenzelement, das sowohl auf der Vorder- wie auf der Rückseite des Sicherheitselements jeweils einen Farbkippeffekt erzeugt, wenn das Sicherheitselement unter verschiedenen Winkeln betrachtet wird. Der Farbkippeffekt kann dabei auf der Vorder- und Rückseite des Sicherheitselements gleich, aber auch unterschiedlich ausgestaltet sein.

Darüber hinaus besitzt das Sicherheitselement Beugungsstrukturen, die sich mit dem Interferenzelement zumindest teilweise überlagern.

Aufgrund des komplexen mehrschichtigen Aufbaus der Sicherheitselemente und der damit nur schwer nachzustellenden Beugungs-, Farbkipp- und Farbwechseleffekte sind diese nur mit großem Aufwand nachahmbar.

Das Interferenzelement wird durch übereinander liegende Interferenzschichten, den Absorber- und Dielektrikumschichten, gebildet, wobei auch mehrere Absorber- und Dielektrikumschichten abwechselnd übereinander angeordnet sein können. Anstelle von alternierenden Absorber- und Dielektrikumschichten können auch ausschließlich Dielektrikumschichten vorgesehen sein, wobei aneinander grenzende Schichten stark unterschiedliche Brechungsindices besitzen, damit ein Farbkippeffekt erzeugt wird. Die Verwendung der Absorberschichten ist jedoch vorteilhaft, weil die Farbkippeffekte besser sichtbar sind.

Grundsätzlich kann das Interferenzelement I mehrschichtig aufgebaut sein, umfasst aber vorzugsweise mindestens drei Interferenzschichten, nämlich zwei Absorberschichten A₁, A₂ und eine zwischen den Absorberschichten liegende Dielektrikumschicht D. Ein derartiges dreischichtiges Interferenzelement kann einen dichroitischen Farbkippeffekt bei wechselnden Betrachtungswinkeln und/oder bei Wechsel zwischen Auflicht- und Durchlichtbetrachtung hervorrufen. Durch weitere Dielektrikum- und/ oder Absorberschichten in abwechselnder Reihenfolge können weitere Farbwechsel erzielt werden bzw. Farbwechsel verstärkt werden.

Als Absorberschichten A₁, A₂ dienen typischerweise Metallschichten aus Materialien wie Chrom, Eisen, Gold, Aluminium oder Titan in einer Dicke von vorzugsweise 4 nm bis 20 nm. Als Absorberschichtmaterialien können auch Verbindungen wie Nickel-Chrom-Eisen oder seltenere Metalle wie Vanadium, Palladium oder Molybdän verwendet werden. Weitere geeignete Materialien sind z.B. Nickel, Cobalt, Wolfram, Niobium, Aluminium, Metallverbindungen, wie Metallfluoride, -oxide, -sulfide, -nitride, -carbide, -phosphide, -selenide, -silicide und Verbindungen davon, aber auch Kohlenstoff, Germanium, Cermet, Eisenoxid und dergleichen. Die Absorberschichten können identisch sein, können aber auch unterschiedlich dick sein und/ oder aus unterschiedlichem Material bestehen.

Für die Dielektrikumschicht kommen hauptsächlich transparente Materialien mit einem niedrigen Brechungsindex < 1,7 in Betracht, wie beispielsweise SiO₂ MgF, SiOx mit 1 < x < 2 und Al₂O₃. Grundsätzlich kommen fast alle aufdampfbaren, durchsichtigen Verbindungen in Frage, insbesondere also auch höher brechende Beschichtungsmaterialien, wie ZrO₂ ZnS, TiO₂ und Indiumzinnoxide (ITO). Die Schichtdicke der Dielektrikumschicht D liegt im Bereich von 100 nm bis 1000 nm, bevorzugt 200 nm bis 500 nm.

Besonders dünne Interferenzschichten werden bevorzugt.

Die Absorber- und die Dielektrikumschichten des Interferenzelements I werden im Vakuumbedampfungsverfahren auf dem Substrat S erzeugt, welches einen Bestandteil des Sicherheitselements 1 bilden kann, welches aber auch lediglich als Zwischenträger dienen kann und spätestens bei der Applikation des Sicherheitselements auf oder in einen Gegenstand entfernt wird.

Unterschiedlichste Bedampfungsverfahren sind zur Erzeugung der Schichten geeignet. Eine methodische Gruppe bildet Physical Vapor Deposition (PVD) mit Schiffchenbedampfung, Bedampfung durch Widerstandsheizung, Bedampfung durch Induktionsheizung oder auch Elektronenstrahlbedampfung, Sputtern (DC oder AC) und Lichtbogenbedampfung. Andererseits kann die Bedampfung auch als Chemical Vapor Deposition (CVD) erfolgen wie z.B. Sputtern im reaktiven Plasma oder jede andere plasmaunterstützte Bedampfungsart.

Der Aufbau des Interferenzelements kann so gewählt werden, dass das Farbspiel je nach Betrachtungsseite des Sicherheitselements gleich oder unterschiedlich ist. Vorzugsweise ist das Interferenzelement symmetrisch ausgestaltet, d.h. auf Vorder- und Rückseite des Sicherheitselements nimmt der Betrachter den gleichen Farbkippeffekt wahr. Unterschiedliche Effekte ergeben sich zum Beispiel durch Variation der in einzelnen Schichten verwendeten Materialien und/oder durch Variation der Schichtdicken der das Interferenzelement aufbauenden Einzelschichten.

Das Interferenzelement ist semitransparent ausgestaltet. Unter "Semitransparenz" ist hierbei Transluzenz zu verstehen, d.h. die Schicht weist eine Lichtdurchlässigkeit von unter 90%, vorzugsweise zwischen 80% und 20% auf.

Als Beugungsstrukturen kommen Refraktionsmuster, Transmissions-, Volumen- oder Reflexionshologramme, aber auch Gitterstrukturen in Betracht, die vorzugsweise Bestandteil des das Interferenzelement tragenden Substrats sind, die aber auch in jede andere geeignete Schicht oder in eine zusätzliche Schicht eingebracht sein können. Bei der zusätzlichen Schicht kann es sich z.B. um eine Lackschicht handeln.

Vorzugsweise sind die Beugungsstrukturen in die Oberfläche eines das Sicherheitselement bildenden, transparenten Kunststoffsubstrats eingebracht, insbesondere eingeprägt. Das Interferenzelement liegt auf der Seite des Kunststoffsubstrats vor, in die die Reliefstruktur eingeprägt ist. Auf das Kunststoffsubstrat werden dann die Interferenzschichten aufgebracht, insbesondere im Vakuum aufgedampft. Das Prägen des Kunststoffsubstrats kann aber auch nach dem Aufdampfungsprozess erfolgen. Es ergeben sich somit mehrere Varianten, die unterschiedliche visuelle Effekte besitzen und daher je nach Einsatzzweck mehr oder weniger bevorzugt sein können.

Die Beugungsstrukturen werden durch ein Reliefmuster gebildet, welches unmittelbar an die Interferenzschicht angrenzt. Denn dann sind die Beugungseffekte von jeder Betrachtungsseite des Sicherheitselements nahezu gleichermaßen gut erkennbar. Wird das Sicherheitselement als zweiseitiger Fensterfaden in ein Dokument eingelagert, so ist der Beugungseffekt von beiden Seiten aus sichtbar. Dasselbe gilt bei Applikation des Sicherheitselements vor einem Loch bzw. als Durchsichtsfensterfaden, wenn ein solches Dokument im Auflicht, beispielsweise auf einer Unterlage, betrachtet wird.

Die optische Wirkung eines solchen Sicherheitselements wird von beiden Betrachtungsseiten wesentlich von der Farbwirkung des Interferenzelements bestimmt. Die Beugungsstrukturen bestimmen zumindest von einer Betrachtungsseite, bei geeignetem Schichtaufbau auch von beiden Betrachtungsseiten, das optische Erscheinungsbild wesentlich. In diesem Fall überlagern sich die Effekte beider Sicherheitsmerkmale.

Die Beugungseffekte treten optisch besonders bei Betrachtung im Auflicht hervor, also z.B. wenn das Dokument auf einem Untergrund aufliegt. Bei Betrachtung im Durchlicht treten die Beugungseffekte deutlich zurück. Der Farbkippeffekt ist im Auflicht wie im Durchlicht ausgeprägt.

Ein solches Sicherheitselement eignet sich besonders zum Abdecken von z.B. aufgedruckten Informationen auf einen Gegenstand, die nur unter einem bestimmten Betrachtungswinkel erkennbar sein sollen. Eine beispielsweise goldfarben gedruckte Information ist bei einem Sicherheitselement, das unter einem ersten Betrachtungswinkel grün und unter einem zweiten Betrachtungswinkel goldfarben erscheint, nur unter dem zweiten Betrachtungswinkel erkennbar. Bei geeigneter Farbwahl des Colorshift-Effektes und der Informationen sind diese somit bei bestimmten Betrachtungswinkeln gut wahrnehmbar, unter anderen Betrachtungswinkeln jedoch nahezu unsichtbar.

Ein derartiges Sicherheitselement ist zur Verwendung als zweiseitiger Sicherheitsfaden besonders geeignet, da er von jeder Betrachtungsseite besonders charakteristische Sicherheitsmerkmale erkennen lässt, die visuell prüfbar sind. Ein solcher zweiseitiger Sicherheitsfaden kann entweder als alternierender Sicherheitsfaden eingesetzt werden, der an unterschiedlichen Stellen des Sicherheitsdokuments an den gegenüberliegenden Sicherheitsdokumentoberflächen zutage tritt oder zumindest sichtbar ist. Er kann aber auch als Durchsichtsfensterfaden eingesetzt werden, wo er in einem besonders dünnen oder transparenten Bereich des Dokuments von beiden Dokumentseiten aus visuell erkennbar ist oder wo er ein Loch in dem Dokument überspannt.

Ein solches Sicherheitselement eignet sich aber auch als Transferelement z.B. in Gestalt eines Etiketts oder Patches, welches auf einer Oberfläche des Sicherheitsdokuments über ein Loch appliziert wird. Von einer Seite des Dokuments aus betrachtet, ergibt sich optisch der Eindruck eines Patches mit Farbkippeffekt. Von der anderen Seite aus betrachtet, sieht man durch das Loch des Dokuments einen Ausschnitt des Patches mit einem anderen oder gegebenenfalls auch einem identischen Farbkippeffekt, wobei es vom konkreten Schichtaufbau des Sicherheitselements abhängt, ob ein gegebenenfalls vorhandenes Beugungsdesign von beiden Seiten oder nur von einer Seite aus erkennbar ist.

Als "Transferelement" im Sinne der Erfindung wird ein Sicherheitselement bezeichnet, das auf einer separaten Trägerschicht, beispielsweise einer Kunststofffolie, in der umgekehrten Reihenfolge, wie sie später auf dem Sicherheitspapier zu liegen kommt, vorbereitet wird und anschließend mittels einer Klebstoff- oder Lackschicht in den gewünschten Umrissformen auf das Sicherheitspapier übertragen wird. Die Form des Sicherheitselementes ist nicht beschränkt und es sind alle beliebigen Umrissformen denkbar bis hin zu filigranen Strukturen, wie Guillochen etc. möglich. Häufig werden die Sicherheitselemente auch in Form von Streifen ausgebildet, die parallel zur Kante des Wertdokumentes verlaufen. Die Trägerschicht kann nach dem Übertrag von dem Schichtaufbau des Sicherheitselements abgezogen werden oder als Schutzschicht als fester Bestandteil des Sicherheitselements auf dem Schichtaufbau verbleiben.

Die einzelnen Transferelemente können auf der Trägerschicht als separate Einzelelemente in den zu übertragenden Umrissformen vorbereitet werden. Alternativ wird die Schichtfolge der Transferelemente in kontinuierlicher Form auf der Trägerschicht vorgesehen. Derartige Trägerschichten mit voneinander beabstandeten einzelnen Transferelementen oder einem kontinuierlich verlaufenden Schichtaufbau werden im Folgenden als "Transfermaterial" bezeichnet und die auf der Trägerschicht angeordnete Schichtfolge des Sicherheitselements als "Übertragungslage".

Im Falle der kontinuierlichen Übertragungslage wird das Transfermaterial anschließend über eine Klebstoffschicht mit dem Sicherheitspapier verbunden und die Klebstoffschicht über entsprechende Prägewerkzeuge aktiviert, so dass die Übertragungslage nur in den aktivierten Bereichen an dem Sicherheitspapier haftet. Alle übrigen Bereiche werden anschließend mit der Trägerschicht abgezogen. Alternativ kann auch die Kleberschicht in Form des zu übertragenden Sicherheitselements ausgeführt sein. Als Klebstoffe werden vorzugsweise Heißschmelzkleber verwendet. Es können jedoch auch beliebige andere Klebstoffe, wie Reaktionslacke, verwendet werden.

Das erfindungsgemäß aufgebaute Sicherheitselement lässt sich mit weiteren Sicherheitsmerkmalen kombinieren, insbesondere mit einer Negativ- oder Positivschrift durch lokales Entfernen einer der Interferenzschichten des Interferenzelements. Bei dem erfingungsgemäßen mehrschichtig aufgebauten Interferenzelement ist dabei nur eine Schicht lokal entfernt. Bei einem beispielsweise aus einer ersten Absorberschicht, einer an die erste Absorberschicht angrenzenden und diese überlagernden Dielektrikumsschicht und eine an die Dielektrikumsschicht angrenzende und diese überlagernde zweite Absorberschicht bestehenden Interferenzelement befinden sich die Aussparungen vorzugsweise in der ersten oder zweiten Absorberschicht. Bei der Schrift handelt es sich vorzugsweise um alphanumerische Zeichen, ist aber darauf nicht beschränkt. Im Sinne der Erfindung kann es sich um jedes darstellbare Muster, Zeichen oder Codierung handeln. Aufgrund der Aussparungen im Schichtaufbau ergibt sich so ein zusätzlicher Auflicht-/ Durchlichteffekt ergibt.

Die Zeichen, Muster und Codierungen eines derartigen in einem Wertdokument eingelagerten Sicherheitselements, beispielsweise als Sicherheitsfaden, sind im Auflicht kaum wahrnehmbar, treten aber bei Betrachtung im Durchlicht deutlich als hellere Bereiche gegenüber einer dunklen Umgebung hervor. Je nachdem, welche Schichten im Interferenzelement lokal entfernt sind, können auch farbliche Effekte im Auf- und Durchlicht gesteuert werden.

Diese Eigenschaften und jeweiligen Vorteile der einzelnen Varianten werden nachfolgend in Bezug auf die begleitenden Zeichnungen erläutert. Die in den Figuren gezeigten Proportionen entsprechen nicht unbedingt den in der Realität vorliegenden Verhältnissen und dienen vornehmlich zur Verbesserung der Anschaulichkeit. Darin zeigen:
- Figur 1: eine Banknote mit auf einer Oberfläche appliziertem semitransparenten Patch über einem Loch in der Banknote;
- Figur 2: einen Querschnitt durch die Banknote aus Figur 1 entlang der Linie II - II;
- Figur 3: einen Querschnitt durch die Banknote nach Figur 1 entlang der Linie III - III mit Durchsichtsfensterfaden;
- Figur 4: einen Querschnitt durch die Banknote nach Figur 1 entlang der Linie IV - IV mit einfachem Fenstersicherheitsfaden;
- Figur 5: den Schichtaufbau eines Sicherheitselements;
- Figur 6: den Schichtaufbau eines Sicherheitselements;
- Figur 7: den Schichtaufbau eines Sicherheitselements; und
- Figur 8: den Schichtaufbau des Sicherheitselements nach Figur 5 mit Aussparungen im Interferenzelement.

Die technischen Erläuterungen zu den einzelnen Figuren sind nicht auf die dort jeweiligen gezeigten Ausführungsformen beschränkt, sondern gelten auch zur Erläuterung des allgemeinen Erfindungsgedankens.

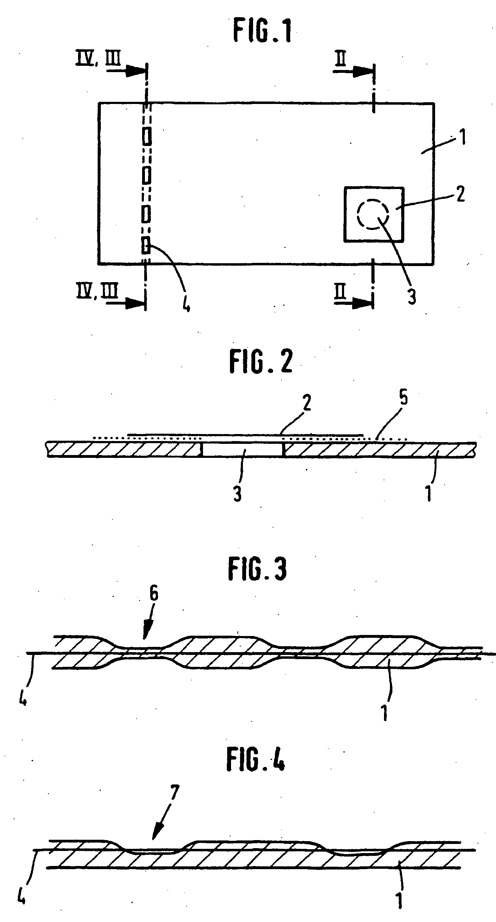

Figur 1 zeigt ein Sicherheitsdokument 1, beispielsweise eine Banknote aus Papier oder eine Ausweiskarte aus Kunststoff, welches mit zwei Sicherheitselementen 2, 4 ausgestattet ist. Bei dem ersten Sicherheitselement 2 handelt es sich um ein Patch, welches auf eine Oberfläche des Dokuments 1 als Etikett oder Transferelement über einem Loch oder einem sonstigen durchsichtigen Bereich 3 des Dokuments 1 appliziert ist, beispielsweise mittels eines Klebers. Bei dem zweiten Sicherheitselement 4 handelt es sich um einen zweiseitigen Fenstersicherheitsfaden, der in dem Dokument 1 entweder alternierend oder als Durchsichtsfensterfaden eingelagert ist.

In den Figuren 2 bis 4 sind die unterschiedlichen Arten der Applikation und Einlagerung der Sicherheitselemente 2 und 4 beispielhaft dargestellt.

Figur 2 zeigt das Sicherheitsdokument 1 aus Figur 1 im Querschnitt entlang der Linie II - II durch das Patch. Betrachtet man eine solche Banknote im Auflicht, beispielsweise auf einem Untergrund aufliegend, treten die Beugungseffekte deutlich hervor. Im Durchlicht betrachtet sind die Beugungseffekte kaum wahrnehmbar. Sowohl im Auflicht als auch im Durchlicht bleibt der Farbkippeffekt bei unterschiedlichen Betrachtungswinkeln erhalten.

Das Loch kann z.B. bereits bei der Papierherstellung papiermacherisch hergestellt oder nachträglich in das Papier eingestanzt werden. Bei geeigneter Ausgestaltung des Colorshift-Effektes und entsprechend farblicher Abstimmung des Aufdruckes 5 kann der Aufdruck unter einem bestimmten Betrachtungswinkel unter dem Patch 2 verborgen sein, unter einem anderen Winkel aber sichtbar sein. Beispielsweise kann sich unter einem Farbkippeffekt zwischen Magentarot und Grün ein magentaroter Aufdruck befinden. Unter dem Betrachtungswinkel, unter dem das Colorshift-Element magentarot erscheint, ist daher der Aufdruck nicht sichtbar und das Colorshift-Element scheinbar opak. Unter dem Betrachtungswinkel, unter dem das Colorshift-Element grün erscheint, kann der darunter liegende Aufdruck wahrgenommen werden und das Colorshift-Element erscheint semitransparent. Im Übrigen ist das Patch 2 im Bereich des Lochs 3 von beiden Seiten erkennbar.

Figur 3 zeigt den Fenstersicherheitsfaden aus Figur 1 als Durchsichtsfensterfaden. Dazu weist das Dokument 1, beispielsweise eine Banknote, Fensterbereiche 6 auf, die sehr dünn und im Extremfall als Loch ausgebildet sind, so dass der Sicherheitsfaden 4 von beiden Seiten des Dokuments 1 aus sichtbar ist. Die optische Wirkung des Sicherheitsfadens 4 im Auflicht und im Durchlicht entspricht dann dem Erscheinungsbild des in Bezug auf Figur 2 beschriebenen Patch 2. Die Durchsichtsfensterbereiche 6 haben dieselbe Funktion wie das Loch 3. Sind die Interferenzschichten und Beugungsstrukturen so gewählt, dass der Farbkippeffekt unabhängig von der Betrachtungsseite jeweils gleich ist, so ist auch ein seitenrichtiges Einbringen des Sicherheitsfaden nicht nötig.

Der Sicherheitsfaden kann auch als alternierend zweiseitiger Fenstersicherheitsfaden in ein Dokument eingelagert werden (nicht dargestellt). Der Faden verläuft hierbei in Fenstern abwechselnd auf der einen und auf der anderen Seite des Dokuments sichtbar. Unabhängig von der Betrachtungsseite des Dokuments ist dann in den Fensterbereichen der Farbkippeffekt erkennbar.

Selbstverständlich ist ein solcher Sicherheitsfaden 4 auch als einfacher Fenstersicherheitsfaden verwendbar, der, wie in Figur 4 gezeigt, nur einseitig in Fenstern 7 zutage tritt.

Verfahren zur Einlagerung eines zweiseitig alternierenden Fensterfadens beispielsweise in Banknoten sind dem Fachmann bekannt.

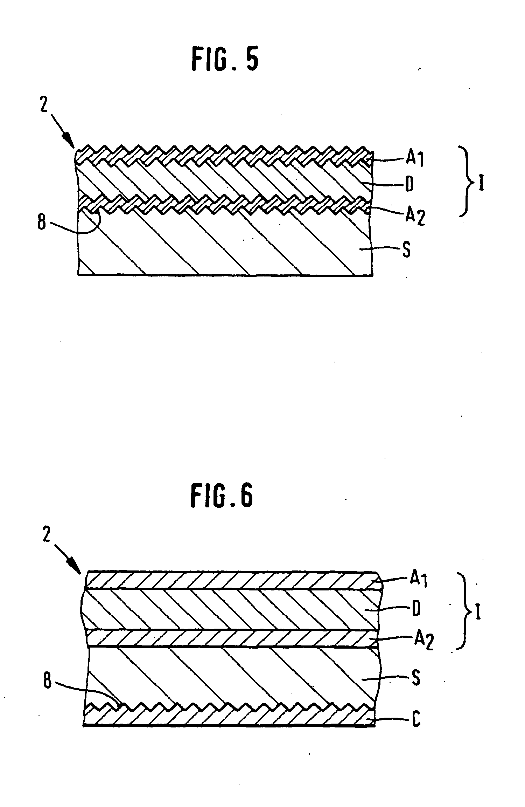

In den Figuren 5 bis 8 sind unterschiedliche Schichtaufbauten eines Sicherheitselements 2 bzw. 4 ausschnittsweise im Querschnitt dargestellt.

Wie nachfolgend anhand der Figuren 5 bis 8 erläutert wird, sind beide Sicherheitselemente mehrschichtig ausgebildet und weisen ein einen Farbkippeffekt erzeugendes Interferenzelement auf, welches mit Beugungsstrukturen überlagert ist. Dementsprechend haben das Interferenzelement und die Beugungsstrukturen einen Einfluss auf das Erscheinungsbild des Sicherheitselements für jede ihrer Betrachtungsseiten. Je nach Ausgestaltung des Schichtaufbaus kann das Erscheinungsbild des Sicherheitselements auf beiden Seiten gleich, aber auch je nach Betrachtungsseite unterschiedlich sein.

Figur 5 zeigt ausschnittsweise im Querschnitt den Schichtaufbau eines Sicherheitselements 2. Das Sicherheitselement 4 kann entsprechend aufgebaut sein. Ein transparentes Substrat S, vorzugsweise eine Kunststofffolie, besitzt einseitig ein geprägtes holograpgisches Oberflächenrelief 8, welches unmittelbar von einem Interferenzelement I überlagert ist. Gemäß eines nicht zur Erfindung gehörenden Alternative kann das Oberflächenrelief 8 auch in eine zusätzliche Lackschicht eingeprägt sein, wobei die Lackschicht auf einer der beiden Substratseiten oder auf der außen liegenden Seite der Absorberschicht A₁ vorliegen kann.

Das Interferenzelement I, bestehend aus zwei Absorber- und einer Dielektrikumschicht, weist einen dichroitischen Farbkippeffekt unter unterschiedlichen Betrachtungswinkeln auf, beispielsweise einen Wechsel zwischen Grün und Magentarot. Bei Verwendung gleicher Materialien und gleicher Schichtdicken für die jeweiligen Absorberschichten A₁ und A₂ weist das Sicherheitselement auf Vorder- und Rückseite den gleichen Farbkippeffekt auf. Etwaige weitere Interferenzschichten und/oder transparente Schichten können über dem Interferenzelement I vorgesehen sein.

Der beugungsoptische Effekt eines Sicherheitselements mit einem Schichtaufbau gemäß Figur 5 ist im Auflicht von jeder Betrachtungsseite gut erkennbar. Im Durchlicht treten die beugungsoptischen Effekte nahezu vollständig zurück. Der Farbkippeffekt ist auf beiden Seiten des Sicherheitselements sowohl im Auflicht als auch im Durchlicht erkennbar.

Da die Interferenzschichten jeweils nur eine Schichtdicke von unter 1 µm aufweisen (die Figuren geben den Schichtaufbau lediglich schematisch wieder), weisen alle Schichten dasselbe Reliefmuster auf, wie die Reliefstruktur 8, auf der die Schichten aufgedampft sind. Dies hat zur Folge, dass die durch die Reliefstruktur 8 hervorgerufenen holographischen Effekte von beiden Betrachtungsseiten aus erkennbar sind. Ist bei einem Schichtaufbau gemäß Figur 5 das Interferenzelement symmetrisch aufgebaut, so lässt sich ein solches Sicherheitselement besonders gut als zweiseitiger Sicherheitsfaden verwenden, denn der beugungsoptische Effekt und der Farbkippeffekt sind auf beiden Seiten nahezu identisch. Beim Einlagern des Sicherheitsfadens braucht daher nicht auf Seitenrichtigkeit geachtet zu werden.

In Figur 6 ist ein nicht zur Erfindung gehöriger alternativer Schichtaufbau des Sicherheitselements 2 gezeigt. In diesem Falle ist das Oberflächenrelief 8 auf der dem Interferenzelement I abgewandten Seite des Substrats S in die Substratoberfläche eingeprägt. Eine optionale Schutzschicht C deckt die empfindliche Reliefstruktur 8 ab. Der Brechungsindex der Schutzschicht C unterscheidet sich wesentlich von dem Brechungsindex des Substrats S, damit der durch die Reliefstruktur erzeugte beugungsoptische Effekt möglichst ausgeprägt ist. Alternativ kann die Schutzschicht auch ein Zweischichtsystem sein. Z.B. kann auf die Reliefstruktur 8 eine hoch brechende Schicht, beispielsweise aus TiO₂, ZnS, ZrO₂ o. ä., aufgedampft werden, auf die eine Schutzschicht aufgebracht wird. In diesem Fall sind keine besonderen Anforderungen an den Brechungsindex der Schutzschicht zu erfüllen.

Betrachtet man ein solches Sicherheitsdokument von der Absorberschicht A₁ aus, so ist ein Farbkippeffekt wahrnehmbar. Holographische Effekte treten auf dieser Betrachtungsseite nicht auf. Betrachtet man dasselbe Sicherheitselement von der gegenüberliegenden Seite, also von der Substratseite aus, so ist ein durch die Beugungsstruktur 8 erzeugter beugungsoptischer Effekt sowie der Farbkippeffekt wahrnehmbar. Insgesamt ergibt sich bei einem Schichtaufbau gemäß Figur 6 somit auf einer Betrachtungsseite ein Hologrammeffekt kombiniert mit einem Farbkippeffekt und auf der anderen Betrachtungsseite ein Farbkippeffekt ohne überlagerte Beugungseffekte.

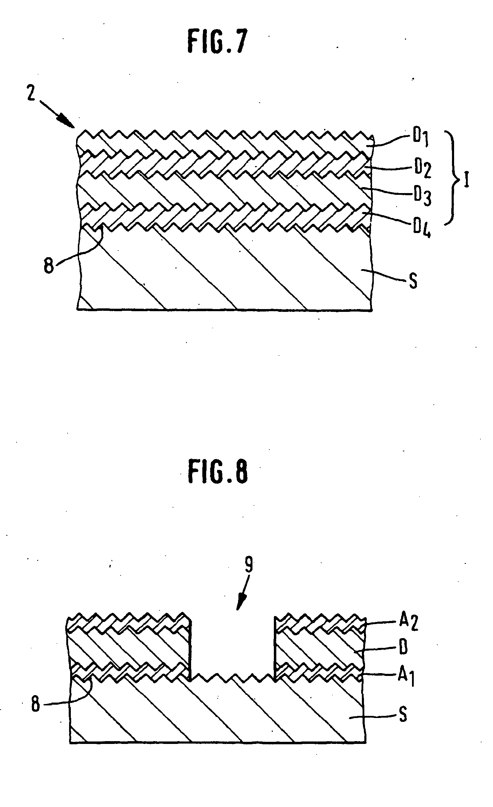

Anstelle von Absorberschichten A₁, A₂ können auch Dielektrikumschichten D eingesetzt werden, wobei der Brechungsindex n von aneinander grenzenden Dielektrikumschichten D stark unterschiedlich sein muss, einerseits n < 1,7 und andererseits n > 1,7, um einen deutlichen Farbkippeffekt hervorzurufen. Ein solcher Schichtaufbau ist in Figur 7 mit vier übereinander liegenden Dielektrikumschichten D₁ bis D₄ dargestellt. Abgesehen von dem unterschiedlichen Schichtaufbau des Interferenzelements I entspricht das Sicherheitselement 2 gemäß Figur 7 dem Sicherheitselement 2 gemäß Figur 5. Der Farbkippeffekt eines solchen Schichtaufbaus ist üblicherweise schwächer ausgeprägt als bei einem Aufbau wie in Fig. 5. Die Lichttransmission ist jedoch mit > 70%, oft auch > 85% erheblich höher.

In Figur 8 ist eine nicht zur Erfindung gehörige Alternative gezeigt, bei der das Interferenzelement I eine Aussparung 9 besitzt, die in Figur 8 nur im Querschnitt zu sehen ist. In Aufsicht kann die Aussparung 9 die Form von Zeichen, Mustern oder Codierungen haben. Diese Muster, Zeichen oder Codierungen treten optisch im Durchlicht besonders hervor. Das Sicherheitselement ist im Bereich der Aussparungen 9 transparent oder zumindest semitransparent ist und zeigt keinen oder einen von den die Aussparungen umgebenden Bereichen abweichenden Colorshift-Effekt. Werden die Interferenzschichten in den Aussparungen vollständig entfernt, lässt sich erreichen, dass die Aussparungen im Durchlicht völlig farblos erscheinen. Dadurch ergibt sich ein zusätzlicher Auflicht-/ Durchlichteffekt. Wird ein solches Sicherheitselement beispielsweise als Sicherheitsfaden in eine Banknote eingelagert, so sind die Aussparungen 9, die die Form von Zeichen, Mustern oder Codierungen besitzen können, im Auflicht, je nach Ausgestaltung des Schichtaufbaus, weniger gut bis kaum wahrnehmbar. Bei Betrachtung im Durchlicht heben sie sich als helle Bereiche von dem ansonsten dunkel wirkenden Sicherheitsfaden ab. Im Auf- und Durchlicht ist der Farbkippeffekt sowohl von der Substratseite aus als auch von der der Substratseite gegenüberliegenden Seite aus sichtbar. Zusätzlich sind im Durchlicht die Aussparungen zu erkennen. Die beugungsoptischen Effekte aufgrund der Beugungsstrukturen (8) sind im Auflicht von beiden Seiten des Sicherheitselements aus sichtbar. In den Bereichen der Aussparungen sind die Colorshift-Effekte nicht mehr erkennbar.

Die Aussparungen 9 in dem Interferenzelement I können durch Laserablation auf einem das Interferenzelement I tragenden Zwischenträger oder auch erst auf dem Substrat S erzeugt werden. Das Substrat S kann aber auch mit einer löslichen Farbe im Bereich der Aussparungen 9 bedruckt werden, bevor die Interferenzschichten aufgedampft werden, und in einem nachfolgenden Prozess kann die lösliche Farbe mit den darüber liegenden Interferenzschichten in dem Bereich der Aussparungen 9 herausgelöst werden. Dem Fachmann sind zahlreiche weitere Verfahren zur Erzeugung der Aussparungen 9 bekannt.

Werden die Interferenzschichten in den Aussparungen 9 nicht vollständig entfernt, liegen z.B. nur Aussparungen in einer oder beiden Absorberschichten vor, kann auch auf das zusätzliche Vorliegen von Beugungsstrukturen verzichtet werden.

### Beispiel 1:

In eine Oberfläche einer transparenten Kunststofffolie wurden Beugungsstrukturen eingeprägt. Auf diese Beugungsstrukturen wurde ein Interferenzelement mit folgendem Schichtaufbau aufgedampft:
- Absorberschicht aus Chrom mit 8 nm Schichtdicke,
- Dielektrikumschicht aus SiO₂ mit 480 nm optischer Weglänge,
- Absorberschicht aus Chrom mit 8 nm Schichtdicke.

Das so ausgebildete Sicherheitselement wurde auf eine Banknote über einem Loch appliziert. Das Sicherheitselement wies einen deutlichen Farbkippeffekt von Grün bei senkrechter Betrachtung nach Magentarot bei Betrachtung in einem Winkel < 45° auf.

Bei Betrachtung im Durchlicht ist das Sicherheitselement durchscheinend und der Farbkippeffekt von beiden Betrachtungsseiten deutlich sichtbar. Die Hologrammeffekte traten bei Betrachtung im Durchlicht nahezu vollständig zurück.

Bei Betrachtung im Auflicht auf einer Unterlage ist dagegen der Hologrammeffekt deutlich sichtbar und zwar von beiden Seiten des Sicherheitselements aus. Auch der Farbkippeffekt ist deutlich sichtbar. Die holographischen Effekte gaben in Kombination mit dem farbigen Interferenzelement einen im Gegensatz zu typischen Reflexionshologrammen mit metallischem Hintergrund außerordentlich farbigen Eindruck.

### Beispiel 2:

Die Ausführung erfolgt wie in Beispiel 1 mit dem Unterschied, dass das Interferenzelement folgenden Schichtaufbau aufweist:
- Absorberschicht aus Chrom mit 10 nm Schichtdicke,
- Dielektrikumsschicht aus SiO₂ mit 280 nm Schichtdicke,
- Absorberschicht aus Chrom mit 10 nm Schichtdicke

Im Allgemeinen und in allen beschriebenen Ausführungsformen ist das Substrat S vorzugsweise transparent, möglicherweise farbig transparent oder farbig transparent beschichtet. Das Substrat S ist vorzugsweise eine flexible Kunststofffolie, die nach dem Einprägen der Reliefstruktur 8 und nach der Beschichtung mit dem Interferenzelement I in Bänder, Fäden oder Etiketten zerschnitten wird. Das Substrat S kann auch auf einer Transferfolie vorliegen und im Transferverfahren, beispielsweise im Hot-Stamp-Verfahren, auf das Dokument übertragen werden. Zusätzlich zu den Schichtaufbauten gemäß Figuren 5 bis 8 können deshalb weitere Schutzschichten und insbesondere Klebeschichten und Abdeckschichten vorgesehen sein, damit das Sicherheitselement entweder als Etikett nach dem Entfernen der Abdeckschicht auf einen Gegenstand aufgeklebt oder als Transferelement im Transferverfahren übertragen werden kann.

## Patentansprüche

1. Sicherheitsdokument, insbesondere Wertpapier, wie z.B. Banknote, oder Halbzeug zur Herstellung des Sicherheitsdokuments, umfassend ein Substrat (1) mit einer ersten und einer zweiten, einander gegenüber liegenden Substratoberfläche und ein mehrschichtiges Sicherheitselement (2, 4), welches mit dem Substrat (1) derart verbunden ist, dass es zumindest von einer der beiden Substratoberflächen aus visuell erkennbar ist, wobei das Sicherheitselement ein einen Farbkippeffekt erzeugendes, mehrschichtiges Interferenzelement (I) und eine Schicht (S) mit Beugungsstrukturen (8) umfasst, die sich mit dem Interferenzelement (I) zumindest teilweise überlagert, **dadurch gekennzeichnet, dass** das Sicherheitselement semitransparent ist, das Interferenzelement (I) Aussparungen (9) in Form von Zeichen, Mustern oder Codierungen besitzt, die nur in einer der Schichten des Interferenzelements vorliegen und die Beugungsstrukturen (8) unmittelbar an das Interferenzelement (I) angrenzen, wobei die das Interferenzelement (I) bildenden Schichten (A₁, D, A₂; D₁ bis D₄) aufgedampft sind.

2. Sicherheitsdokument oder Halbzeug nach Anspruch 1, wobei das Sicherheitselement (2,4) auf einer der beiden Substratoberflächen appliziert ist und ein Loch (3) oder einen durchsichtigen Bereich im Substrat (1) überspannt.

3. Sicherheitsdokument oder Halbzeug nach Anspruch 1, wobei das Sicherheitselement (4) zumindest teilweise in dem Substrat (1) eingelagert ist und ein Loch (3) oder einen durchsichtigen Bereich im Substrat (1) überspannt.

4. Sicherheitsdokument oder Halbzeug nach Anspruch 3, wobei das Sicherheitselement (4) in dem Substrat (1) derart eingelagert ist, dass es in ersten Bereichen (7) des Substrats (1) an der ersten Substratoberfläche und gegebenenfalls zusätzlich in den von den ersten Bereichen unterschiedlichen, zweiten Bereichen des Substrats an der zweiten Substratoberfläche visuell erkennbar ist.

5. Sicherheitsdokument oder Halbzeug nach Anspruch 3 oder 4, wobei das Sicherheitselement (4) ein Sicherheitsfaden ist.

6. Sicherheitsdokument oder Halbzeug nach wenigstens einem der Ansprüche 1 bis 5, wobei das Interferenzelement (I) auf einem transparenten Kunststoffsubstrat (S) vorliegt.

7. Sicherheitsdokument oder Halbzeug nach Anspruch 6, wobei das Kunststoffsubstrat (S) farbig ist.

8. Sicherheitsdokument oder Halbzeug nach wenigstens einem der Ansprüche 1 bis 7, wobei das Interferenzelement (I) eine erste Absorberschicht (A₁), eine an die erste Absorberschicht (A₁) angrenzende und diese überlagernde Dielektrikumschicht (D) und eine an die Dielektrikumsschicht (D) angrenzende und diese überlagernde zweite Absorberschicht (A₂) umfasst.

9. Sicherheitsdokument oder Halbzeug nach wenigstens einem der Ansprüche 1 bis 7, wobei das Interferenzelement (I) mindestens drei aneinander grenzende, einander überlagernde Dielektrikumschichten (D₁ bis D₄) umfasst, die abwechselnd einen hohen und einen niedrigen Brechungsindex besitzen.

10. Sicherheitsdokument oder Halbzeug nach wenigstens einem der Ansprüche 1 bis 9, wobei die Aussparungen einer der Absorberschichten vorliegen.

11. Sicherheitsdokument oder Halbzeug nach wenigstens einem der Ansprüche 6 bis 10, wobei das Kunststoffsubstrat (S) die Beugungsstrukturen (8) aufweist.

12. Sicherheitsdokument oder Halbzeug nach wenigstens einem der Ansprüche 1 bis 10, wobei die Beugungsstrukturen (8) in einer separaten Schicht vorliegen.

13. Sicherheitsdokument oder Halbzeug nach wenigstens einem der Ansprüche 1 bis 12, wobei die Beugungsstrukturen (8) ein geprägtes Reliefmuster umfassen.

14. Sicherheitsdokument oder Halbzeug nach wenigstens einem der Ansprüche 1 bis 13, wobei ein von den Beugungsstrukturen hervorgerufener Effekt je nach Betrachtungsweise des Sicherheitselements von einer oder beiden Seiten des Sicherheitselements visuell erkennbar ist.

15. Sicherheitsdokument oder Halbzeug nach wenigstens einem der Ansprüche 1 bis 14, wobei ein von den Beugungsstrukturen hervorgerufener Effekt und/oder ein von dem Interferenzelement erzeugter Farbkippeffekt je nach Betrachtungsweise des Sicherheitselements von beiden Seiten des Sicherheitselements visuell erkennbar sind.

16. Sicherheitsdokument oder Halbzeug nach Anspruch 15, wobei der von den Beugungsstrukturen hervorgerufene Effekt und/oder der von dem Interferenzelement erzeugte Farbkippeffekt je nach Betrachtungsweise des Sicherheitselements von beiden Seiten des Sicherheitselements gleich ausgestaltet sind.

17. Sicherheitselement zur Einlagerung in oder zur Applikation auf ein Sicherheitsdokument (1), insbesondere für ein Wertpapier, wie z.B. eine Banknote, wobei das Sicherheitselement ein einen Farbkippeffekt erzeugendes, mehrschichtiges Interferenzelement (I) und eine Schicht (S) mit Beugungsstrukturen (8) umfasst die sich mit dem Interferenzelement (I) zumindest teilweise überlagert, **dadurch gekennzeichnet, dass** das Sicherheitselement semitransparent ist, das Interferenzelement (I) Aussparungen (9) in Form von Zeichen, Mustern oder Codierungen besitzt, die nur in einer der Schichten des Interferenzelements vorliegen, und die Beugungsstrukturen (8) unmittelbar an das Interferenzelement (I) an grenzen, wobei die das Interferenzelement (I) bildenden Schichten (A₁, D, A₂ D₁ bis D₄) aufgedampft sind.

18. Sicherheitselement nach Anspruch 17, wobei das Interferenzelement (I) auf einem transparenten Kunststoffsubstrat (S) vorliegt.

19. Sicherheitselement nach Anspruch 17 oder 18, wobei das Interferenzelement (I) eine erste Absorberschicht (A₁), eine an die erste Absorberschicht (A₁) angrenzende und diese überlagernde Dielektrikumschicht (D) und eine an die Dielektrikumsschicht (D) angrenzende und diese überlagernde zweite Absorberschicht (A₂) umfasst.

20. Sicherheitselement nach Anspruch 19 oder 20, wobei die Interferenzschicht (I) mindestens drei aneinander grenzende, einander überlagernde Dielektrikumschichten (D₁ bis D₄) umfasst, die abwechselnd einen hohen und einen niedrigen Brechungsindex besitzen.

21. Sicherheitselement nach wenigstens einem der Ansprüche 17 bis 20, wobei die Aussparungen in einer der Absorberschichten vorliegen.

22. Sicherheitselement nach wenigstens einem der Ansprüche 18 bis 21, wobei das Kunststoffsubstrat (5) die Beugungsstrukturen (8) aufweist

23. Sicherheitselement nach wenigstens einem der Ansprüche 17 bis 21, wobei die Beugungsstrukturen (8) in einer separaten Schicht vorliegen.

24. Sicherheitselement nach wenigstens einem der Ansprüche 17 bis 23, wobei die Beugungsstrukturen (8) ein geprägtes Reliefmuster umfassen.

25. Sicherheitselement nach wenigstens einem der Ansprüche 17 bis 24, wobei ein von den Beugungsstrukturen hervorgerufener Effekt und/ oder ein von dem überlagernden Interferenzelement erzeugter Farbkippeffekt je nach Betrachtungsweise des Sicherheitselements von beiden Seiten des Sicherheitselements visuell erkennbar sind.

26. Sicherheitselement nach wenigstens einem der Ansprüche 17 bis 25 in Form eines Sicherheitsfadens zur Einlagerung in ein Sicherheitsdokument

27. Sicherheitselement nach wenigstens einem der Ansprüche 17 bis 26 als Etikett oder Patch zur Applikation auf ein Sicherheitsdokument.

28. Sicherheitselement nach wenigstens einem der Ansprüche 17 bis 25 und 27 als Transferelement zur Applikation auf ein Sicherheitsdokument im Transferverfahren.

29. Transfermaterial zur Aufbringung eines Sicherheitselements auf ein Wertdokument, wobei das Transfermaterial folgenden Schichtaufbau umfasst
- ein mehrschichtiges Interferenzelement (I) mit Farbkippeffekt und
- eine sich mit dem Interferenzelement zumindest teilweise überlagernde Schicht (3) mit Beugungsstrukturen, **dadurch gekennzeichnet, dass** das Sicherheitselement semitransparent ist, das Interferenzelement (I) Aussparungen (9) in Form von Zeichen, Mustern oder Codierungen besitzt, die nur in einer der Schichten des Interferenzelements vorliegen, und die Beugungsstrukturen (8) unmittelbar an das Interferenzelement (I) angrenzen, wobei die das Interferenzelement (I) bildenden Schichten (A₁, D, A₂ D₁ bis D₄) aufgedampft sind.

30. Verfahren zur Herstellung eines Wertdokuments mit einem Sicherheitselement, **dadurch gekennzeichnet, dass** auf das Wertdokument bereichsweise der Schichtaufbau des Transfermaterials gemäß Anspruch 29 übertragen wird.

31. Verwendung des Sicherheitsdokuments oder Halbzeuges gemäß wenigstens einem der Ansprüche 1 bis 16 für die Absicherung von Produkten.

## Claims

1. A security document, in particular paper of value such as bank note, or semifinished product for producing the security document, comprising a substrate (1) with first and second opposing substrate surfaces and a multilayer security element (2, 4) that is so connected with the substrate (1) that it is visually recognizable at least from one of the two substrate surfaces, wherein the security element includes a multilayer interference element (I) producing a color shift effect and a layer (S) with diffraction structures (8) that at least partly overlaps the interference element (I), **characterized in that** the security element is semitransparent, the interference element (*I*) has gaps (9) in the form of signs, patterns or encodings that are present only in one of the layers of the interference element, and the diffraction structures (8) directly adjoin the interference element (*I*), wherein the layers *(A*₁, *D*, *A*₂; *D*₁ to *D*₄) constituting the interference element (1) are vapor-deposited.

2. The security document or semifinished product according to claim 1, wherein the security element (2, 4) is applied to one of the two substrate surfaces and spans a hole (3) or a transparent area in the substrate (1).

3. The security document or semifinished product according to claim 1, wherein the security element (4) is at least partly embedded in the substrate (1) and spans a hole (3) or a transparent area in the substrate (1).

4. The security document or semifinished product according to claim 3, wherein the security element (4) is so embedded in the substrate (1) that it is visually recognizable in first areas (7) of the substrate (1) on the first substrate surface and optionally additionally in the second areas of the substrate different from the first areas on the second substrate surface.

5. The security document or semifinished product according to claim 3 or 4, wherein the security element (4) is a security thread.

6. The security document or semifinished product according to at least one of claims 1 to 5, wherein the interference element (*I*) is present on a transparent plastic substrate (*S*).

7. The security document or semifinished product according to claim 6, wherein the plastic substrate (*S*) is colored.

8. The security document or semifinished product according to at least one of claims 1 to 7, wherein the interference element (*I*) includes a first absorber layer (*A*₁), a dielectric layer (*D*) adjoining and overlying the first absorber layer (*A*₁) and a second absorber layer (*A*₂) adjoining and overlying the dielectric layer (*D*).

9. The security document or semifinished product according to at least one of claims 1 to 7, wherein the interference element (*I*) includes at least three adjacent, mutually overlying dielectric layers (*D*₁ to *D*₄) having alternately a high and a low refractive index.

10. The security document or semifinished product according to at least one of claims 1 to 9, wherein the gaps are present in one of the absorber layers.

11. The security document or semifinished product according to at least one of claims 6 to 10, wherein the plastic substrate (*S*) has the diffraction structures (8).

12. The security document or semifinished product according to at least one of claims 1 to 10, wherein the diffraction structures (8) are present in a separate layer.

13. The security document or semifinished product according to at least one of claims 1 to 12, wherein the diffraction structures (8) include an embossed relief pattern.

14. The security document or semifinished product according to at least one of claims 1 to 13, wherein an effect caused by the diffraction structures is visually recognizable from one or both sides of the security element depending on the way of viewing the security element.

15. The security document or semifinished product according to at least one of claims 1 to 14 , wherein an effect caused by the diffraction structures and/or a color shift effect produced by the interference element are visually recognizable from both sides of the security element depending on the way of viewing the security element.

16. The security document or semifinished product according to claim 15, wherein the effect caused by the diffraction structures and/or the color shift effect produced by the interference element are of identical design from both sides of the security element depending on the way of viewing the security element.

17. A security element to be embedded in or applied to a security document (1), in particular for a paper of value such as a bank note, wherein the security element includes a multilayer interference element (*I*) producing a color shift effect and a layer (*S*) with diffraction structures (8) that at least partly overlaps the interference element (*I*), **characterized in that** the security element is semitransparent, the interference element (*I*) has gaps (9) in the form of signs, patterns or encodings that are present only in one of the layers of the interference element, and the diffraction structures (8) directly adjoin the interference element (*I*), wherein the layers (*A*₁*, D, A*₂; *D*₁ to *D*₄) constituting the interference element (*I*) are vapor-deposited.

18. The security element according to claim 17, wherein the interference element (*I*) is present on a transparent plastic substrate (*S*).

19. The security element according to claim 17 or 18, wherein the interference element (*I*) includes a first absorber layer (*A*₁), a dielectric layer (*D*) adjoining and overlying the first absorber layer (*A*₁) and a second absorber layer (*A*₂) adjoining and overlying the dielectric layer (*D*).

20. The security element according to claim 19 or 20, wherein the interference layer (*I*) includes at least three adjacent, mutually overlying dielectric layers (*D*₁ to *D*₄) having alternately a high and a low refractive index.

21. The security element according to at least one of claims 17 to 20, wherein the gaps are present in one of the absorber layers.

22. The security element according to at least one of claims 18 to 21, wherein the plastic substrate (*S*) has the diffraction structures (8).

23. The security element according to at least one of claims 17 to 21, wherein the diffraction structures (8) are present in a separate layer.

24. The security element according to at least one of claims 17 to 23, wherein the diffraction structures (8) include an embossed relief pattern.

25. The security element according to at least one of claims 17 to 24, wherein an effect caused by the diffraction structures and/or a color shift effect produced by the overlying interference element are visually recognizable from both sides of the security element depending on the way of viewing the security element.

26. The security element according to at least one of claims 17 to 25 in the form of a security thread to be embedded in a security document.

27. The security element according to at least one of claims 17 to 26 as a label or patch to be applied to a security document.

28. The security element according to at least one of claims 17 to 25 and 27 as a transfer element to be applied to a security document by the transfer method.

29. Transfer material for applying a security element to a document of value, wherein the transfer material includes the following layer structure:
- a multilayer interference element (*I*) with a color shift effect, and
- a layer (3) with diffraction structures that at least partly overlaps the interference element, **characterized in that** the security element is semitransparent, the interference element (*I*) has gaps (9) in the form of signs, patterns or encodings that are present only in one of the layers of the interference element, and the diffraction structures (8) directly adjoin the interference element (*I*), wherein the layers (*A*₁, *D*, *A*₂; *D*₁ to *D*₄) constituting the interference element (*I*) are vapor-deposited.

30. A method for producing a document of value having a security element, **characterized in that** the layer structure of the transfer material according to claim 29 is transferred to the document of value in certain areas.

31. Use of the security document or semifinished product according to at least one of claims 1 to 16 for protecting products.

## Revendications

1. Document de sécurité, notamment papier-valeur, tel que p.ex. billet de banque, ou semi-fini pour la fabrication du document de sécurité, comprenant un substrat (1) comportant une première et une deuxième surface de substrat se faisant face, et un élément de sécurité (2, 4) multicouche qui est joint de telle sorte au substrat (1) qu'il est, au moins à partir d'une des deux surfaces de substrat, reconnaissable visuellement, l'élément de sécurité comportant un élément d'interférence (I) multicouche générant un changement des couleurs par basculement et une couche (S) ayant des structures de diffraction (8) qui se superpose au moins partiellement avec l'élément d'interférence (I), **caractérisé en ce que** l'élément de sécurité est semi-transparent, **en ce que** l'élément d'interférence (I) possède des évidements (9) sous forme de caractères, motifs ou codifications qui ne se trouvent que dans une des couches de l'élément d'interférence, et **en ce que** les structures de diffraction (8) sont directement adjacentes à l'élément d'interférence (I), les couches (A₁, D₁, A₂; D₁ à D₄) constituant l'élément d'interférence (I) étant déposées en phase vapeur.

2. Document de sécurité ou semi-fini selon la revendication 1, l'élément de sécurité (2, 4) étant appliqué sur une des deux surfaces du substrat et s'étendant par-dessus un trou (3) ou une zone transparente dans le substrat (1).

3. Document de sécurité ou semi-fini selon la revendication 1, l'élément de sécurité (4) étant au moins partiellement incorporé dans le substrat (1) et s'étendant par-dessus un trou (3) ou une zone transparente dans le substrat (1).

4. Document de sécurité ou semi-fini selon la revendication 3, l'élément de sécurité (4) étant incorporé de telle manière dans le substrat (1) qu'il est, dans des premières zones (7) du substrat (1) à la première surface de substrat et le cas échéant en plus dans les deuxièmes zones du substrat différentes des premières zones à la deuxième surface de substrat, reconnaissable visuellement.

5. Document de sécurité ou semi-fini selon la revendication 3 ou 4, l'élément de sécurité (4) étant un fil de sécurité.

6. Document de sécurité ou semi-fini selon au moins une des revendications de 1 à 5, l'élément d'interférence (I) se trouvant sur un substrat en matière plastique (S) transparent.

7. Document de sécurité ou semi-fini selon la revendication 6, le substrat en matière plastique (S) étant coloré.

8. Document de sécurité ou semi-fini selon au moins une des revendications de 1 à 7, l'élément d'interférence (I) comprenant une première couche absorbante (A₁), une couche diélectrique (D) adjacente à la première couche absorbante (A₁) et s'y superposant, et une deuxième couche absorbante (A₂) adjacente à la couche diélectrique (D) et s'y superposant.

9. Document de sécurité ou semi-fini selon au moins une des revendications de 1 à 7, l'élément d'interférence (I) comprenant au moins trois couches diélectriques (D₁ à D₄) adjacentes entres elles et se superposant qui possèdent en alternance un indice de réfraction élevé et faible.

10. Document de sécurité ou semi-fini selon au moins une des revendications de 1 à 9, les évidements se trouvant dans une des couches absorbantes.

11. Document de sécurité ou semi-fini selon au moins une des revendications de 6 à 10, le substrat en matière plastique (S) comportant les structures de diffraction (8).

12. Document de sécurité ou semi-fini selon au moins une des revendications de 1 à 10, les structures de diffraction (8) se trouvant dans une couche distincte.

13. Document de sécurité ou semi-fini selon au moins une des revendications de 1 à 12, les structures de diffraction (8) comprenant un motif en relief gaufré.

14. Document de sécurité ou semi-fini selon au moins une des revendications de 1 à 13, un effet engendré par les structures de diffraction étant, en fonction de la manière dont l'élément de sécurité est observé, reconnaissable visuellement à partir d'un ou des deux côtés de l'élément de sécurité.

15. Document de sécurité ou semi-fini selon au moins une des revendications de 1 à 14, un effet engendré par les structures de diffraction et/ou un effet de changement des couleurs par basculement généré par l'élément d'interférence étant, en fonction de la manière dont l'élément de sécurité est observé, reconnaissable visuellement à partir des deux côtés de l'élément de sécurité.

16. Document de sécurité ou semi-fini selon la revendication 15, l'effet engendré par les structures de diffraction et/ou l'effet de changement des couleurs par basculement généré par l'élément d'interférence étant, en fonction de la manière dont l'élément de sécurité est observé, formés de la même manière des deux côtés de l'élément de sécurité.

17. Elément de sécurité destiné à être incorporé dans ou appliqué sur un document de sécurité (1), notamment pour un papier-valeur, tel que p.ex. un billet de banque, l'élément de sécurité comportant un élément d'interférence (I) multicouche générant un changement des couleurs par basculement et une couche (S) ayant des structures de diffraction (8) qui se superpose au moins partiellement avec l'élément d'interférence (I), **caractérisé en ce que** l'élément de sécurité est semi-transparent, **en ce que** l'élément d'interférence (I) possède des évidements (9) sous forme de caractères, motifs ou codifications qui ne se trouvent que dans une des couches de l'élément d'interférence, et **en ce que** les structures de diffraction (8) sont directement adjacentes à l'élément d'interférence (I), les couches (A₁, D₁, A₂; D₁ à D₄) constituant l'élément d'interférence (I) étant déposées en phase vapeur.

18. Elément de sécurité selon la revendication 17, l'élément d'interférence (I) se trouvant sur un substrat en matière plastique (S) transparent.

19. Elément de sécurité selon la revendication 17 ou 18, l'élément d'interférence (I) comprenant une première couche absorbante (A₁), une couche diélectrique (D) adjacente à la première couche absorbante (A₁) et s'y superposant, et une deuxième couche absorbante (A₂) adjacente à la couche diélectrique (D) et s'y superposant.

20. Elément de sécurité selon la revendications de 19 ou 20, la couche d'interférence (I) comprenant au moins trois couches diélectriques (D₁ à D₄) adjacentes entres elles et se superposant qui possèdent en alternance un indice de réfraction élevé et faible.

21. Elément de sécurité selon au moins une des revendications de 17 à 20, les évidements se trouvant dans une des couches absorbantes.

22. Elément de sécurité selon au moins une des revendications de 18 à 21, le substrat en matière plastique (5) comportant les structures de diffraction (8).

23. Elément de sécurité selon au moins une des revendications de 17 à 21, les structures de diffraction (8) se trouvant dans une couche distincte.

24. Elément de sécurité selon au moins une des revendications de 17 à 23, les structures de diffraction (8) comprenant un motif en relief gaufré.

25. Elément de sécurité selon au moins une des revendications de 17 à 24, un effet engendré par les structures de diffraction et/ou un effet de changement des couleurs par basculement généré par l'élément d'interférence superposé étant, en fonction de la manière dont l'élément de sécurité est observé, reconnaissable visuellement à partir des deux côtés de l'élément de sécurité.

26. Elément de sécurité selon au moins une des revendications de 17 à 25 sous forme d'un fil de sécurité destiné à être incorporé dans un document de valeur.

27. Elément de sécurité selon au moins une des revendications de 17 à 26 en tant qu'étiquette ou patch destiné à être appliqué sur un document de sécurité.

28. Elément de sécurité selon au moins une des revendications de 17 à 25 et 27 en tant qu'élément de transfert destiné à être appliqué sur un document de sécurité (1) par procédé de transfert.

29. Matériau de transfert pour placement d'un élément de sécurité sur un document de valeur, le matériau de transfert comprenant la structure à couches suivante:
- un élément d'interférence (I) multicouche avec effet de changement des couleurs par basculement et
- une couche (3) ayant des structures de diffraction qui se superpose au moins partiellement avec l'élément d'interférence, **caractérisé en ce que** l'élément de sécurité est semi-transparent, **en ce que** l'élément d'interférence (I) possède des évidements (9) sous forme de caractères, motifs ou codifications qui ne se trouvent que dans une des couches de l'élément d'interférence, et **en ce que** les structures de diffraction (8) sont directement adjacentes à l'élément d'interférence (I), les couches (A₁, D₁, A₂; D₁ à D₄) constituant l'élément d'interférence (I) étant déposées en phase vapeur.

30. Procédé de fabrication d'un document de valeur comportant un élément de sécurité, **caractérisé en ce que**, sur le document de valeur, dans certaines zones, la structure à couches du matériau de transfert est transposée selon la revendication 29.

31. Utilisation du document de valeur ou semi-fini selon au moins une des revendications de 1 à 16 pour la sécurisation de produits.
